Europäisches Patentamt

European Patent Office

Office européen des brevets

(19)

(11) Veröffentlichungsnummer: **0 166 799**
**B1**

(12)                     **EUROPÄISCHE PATENTSCHRIFT**

(45) Veröffentlichungstag der Patentschrift:
**11.05.88**

(51) Int. Cl.⁴: **B 64 F 1/28**, B 67 D 5/01,
F 16 L 27/08

(21) Anmeldenummer: **84107766.2**

(22) Anmeldetag: **04.07.84**

(54) Betankungssystem, insbesondere für die Flugzeugbetankung.

(43) Veröffentlichungstag der Anmeldung:
**08.01.86 Patentblatt 86/2**

(45) Bekanntmachung des Hinweises auf die Patenterteilung:
**11.05.88 Patentblatt 88/19**

(84) Benannte Vertragsstaaten:
**BE DE FR GB IT NL**

(56) Entgegenhaltungen:
**GB - A - 456 906**
**US - A - 2 642 311**
**US - A - 4 130 134**

(73) Patentinhaber: **von Meyerinck, Wolfgang, Dipl.-Ing.,
Daubringer Strasse 43, D-6304 Lollar (DE)**
Patentinhaber: **von Meyerinck, Dietz, Arnsburger
Strasse 14, D-6302 Lich 2 (DE)**

(72) Erfinder: **von Meyerinck, Wolfgang, Dipl.-Ing.,
Daubringer Strasse 43, D-6304 Lollar (DE)**
Erfinder: **von Meyerinck, Dietz, Arnsburger Strasse 14,
D-6302 Lich 2 (DE)**

(74) Vertreter: **Patentanwälte Dipl.-Ing. R. Schlee Dipl.-Ing.
A. Missling, Bismarckstrasse 43, D-6300 Giessen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Betankungssystem mit einer Hydrantenkupplung für den Anschluss an Versorgungsleitungen und mit einer Betankungskupplung für den Anschluss an den zu betankenden bzw. zu entleerenden Tank, insbesondere für die Flugzeugbetankung.

Bei der Betankung von Fahrzeugen, insbesondere von Flugzeugen, vor allem dann, wenn sie im militärischen Bereich eingesetzt sind, müssen grössere Treibstoffmengen in kürzerer Zeit von einem Hydrantensystem in den Tank des Flugzeuges oder aber auch in ein Tankfahrzeug umgeschlagen werden. Für die Entnahme des Treibstoffes aus dem Hydranten und die Befüllung von Tankwagen bzw. von Flugzeugen usw. ist es bekannt, Schläuche zu verwenden, die an ihren beiden Enden mit Kupplungen für den Anschluss an den Hydranten sowie an den Flugzeugtank versehen sind. Diese Schläuche werden mit Nennweiten von 2 1/2 bis maximal 3″ eingesetzt, wobei jedoch die Handhabung dieser Schläuche desto schwieriger und umständlicher wird, je grösser die Nennweite und je länger der Schlauch ist. Bei Längen über 20 m ist man aus diesem Grunde gezwungen, Schläuche mit kleineren Durchmessern einzusetzen, da diese infolge ihres Gewichtes nur noch sehr schwer zu handhaben sind. Ein Transport dieser Schläuche von einem Hydrantenanschluss zu dem nächsten ist im abgerollten Zustand in der Regel kaum möglich, denn dann muss der Schlauch über den Boden gezogen werden, was nicht nur einen hohen Kraftaufwand bedeutet, sondern was auch die Haltbarkeit des Schlauches wesentlich beeinträchtigt. Sofern die Schläuche in Betankungsschächten aufbewahrt werden, sind diese zusätzlichem Verschleiss dadurch ausgesetzt, dass diese beim Herausziehen aus dem Schacht über die Kante des Schachtes gezogen werden. Abgesehen von diesen mechanischen Beschädigungen unterliegen die Schläuche auch einem relativ grossen Alterungsprozess, so dass diese periodisch nach einer gewissen Einsatzdauer ausgewechselt werden müssen.

Ein weiterer Nachteil bei der Verwendung des Schlauches besteht darin, dass dieser für die Enttankung nur bedingt und nur in Sonderausfertigung einsetzbar ist. Darüber hinaus ist das Entleeren des Schlauches auch nur durch Anheben desselben, was arbeitstechnisch gleichfalls einen Nachteil bedeutet, möglich. Insbesondere hat sich bei der Verwendung von Schläuchen, insbesondere von Schläuchen mit grossen Nennweiten, herausgestellt, dass zum einen das Ankuppeln des Schlauches an die Tankkupplung wegen des hohen Gewichtes nur mit grosser Mühe möglich ist und dass zum anderen auch die Tankkupplung einem hohen Moment durch den Schlauch unterworfen ist. Alle die vorstehend aufgezeigten Gründe zeigen, dass mit den herkömmlichen Betankungssystemen die Betankungszeit überall da, wo flexible Systeme eingesetzt werden müssen, kaum noch reduziert werden kann.

Ferner sind sogenannte Hydrantenwagen bekannt, die zumindest Betankungsarmaturen aufweisen,die über Schläuche sowohl mit dem Hydranten als auch mit der Betankungskupplung des Flugzeuges verbindbar sind. Der Nachteil dieser Hydrantenfahrzeuge besteht darin, dass diese zum einen auf die Schläuche mit den vorstehend genannten Nachteilen angewiesen sind und zum anderen Fremdenergie benötigen, die zum Aufwickeln der Schläuche wie auch zum Erhöhen des Druckes in den Schlauchleitungen mit geringem Querschnitt dient.

Die GB-PS 456 906 betrifft ein Rohrleitungssystem für die Verteilung von nassem Zement auf Flächen oder in Formen. Das Rohrleitungssystem ist in Form eines Storchenschnabels ausgebildet, wobei die Austrittsöffnung verschoben werden kann.

Die US-A-2 642 311 betrifft eine Bewässerungsvorrichtung, die zur grossflächigen Bewässerung bestimmt ist. Eine derartige Vorrichtung ist weder dafür vorgesehen, noch geeignet für die Betankung von Tankwagen oder Flugzeugen zu dienen.

Der Erfindung liegt die Aufgabe zugrunde, ein Betankungssystem der eingangs genannten Art unter Beibehaltung der Flexibilität, d.h. der Anschlussmöglichkeit der Betankungskupplung an jede Tankkupplung mit beliebiger Lage im Raum so auszubilden, dass diese ohne Handhabungsschwierigkeiten auch bei Nennweitenvon 4″ und grösser ohne Mühe an die jeweilige Tankkupplung anschliessbar ist, dass diese praktisch keinem Verschleiss unterliegt, in einfacher Weise von einem Hydranten zum anderen transportiert werden kann, einen äusserst geringen Wartungsaufwand erfordert und praktisch unbegrenzt einsetzbar ist, sowohl für die Be- als auch für die Enttankung einsetzbar ist und auf einem geringen Raum bei Nichtgebrauch abstellbar ist.

Diese Aufgabe wird mit den Merkmalen des kennzeichnenden Teils des Anspruches 1 gelöst.

Ein Betankungssystem gemäss der Erfindung besteht somit vorteilhaft aus drei Rohrabschnitten, wobei an den beiden äusseren Rohrabschnitten zum einen das Kopfstück mit der Betankungskupplung und zum anderen das Endstück mit der Hydrantenkupplung angeschlossen ist. Der zentrale Rohrabschnitt ist mit zwei Wagen, vorteilhaft im Bereich seiner Enden, versehen, so dass dieser als fahrstabile Einheit dient, an der die beiden äusseren Rohrabschnitte angeordnet sind, die gleichfalls mit einem Transportrad bzw. einem Transportkarren gegenüber dem Boden abgestützt sind. Die äusseren Rohrabschnitte sind gegen den zentralen Rohrabschnitt über jeweils zwei Drehgelenke miteinander verbunden, wobei die Drehachsen dieser Drehgelenke jeweils senkrecht zueinander angeordnet sind, so dass die äusseren Rohrabschnitte sowohl horizontal wie auch vertikal zum zentralen Rohrabschnitt verschwenkbar sind. An den Enden der äusseren Rohrabschnitte ist jeweils ein Enddrehgelenk angeordnet, dessen Drehachse im wesentlichen lotrecht liegt, so dass das Endstück mit der Hydrantenkupplung sowie das Kopfstück mit der Betankungskupplung in waagerechter Richtung zu diesen äusseren Rohrabschnitten verschwenkbar angeordnet sind.

Das Endstück besteht aus zwei Rohrstücken, die mittels eines Drehgelenks verbunden sind, das senkrecht zum Enddrehgelenk des äusseren Rohrabschnittes liegt. Die Hydrantenkupplung ist ihrerseits wiederum mit einem Drehgelenk mit dem äusseren Rohrstück verbunden, und zwar liegt die Drehachse dieses Drehgelenks parallel zu der nachfolgend angeordneten Drehachse. Hierdurch ist die Hydrantenkupplung an den Hydranten anschliessbar, auch wenn dieser in unterschiedlicher Höhe über dem Erdboden angeordnet sein sollte.

In Weiterbildung der Erfindung besteht ein Kopfstück für ein erfindungsgemässes Betankungssystem aus fünf Rohrabschnitten, die durch vier Drehgelenke mit jeweils einem Freiheitsgrad miteinander verbunden sind, so dass die an einem Ende des Kopfstückes befindliche Kupplung jede beliebige Stellung im Raum einnehmen kann. Hierzu sind diese vier Drehgelenke sowie das erste Drehgelenk derart angeordnet, dass drei Drehachsen parallel zueinander liegen, während die übrigen beiden Drehachsen senkrecht hierzu liegen. Durch diese Anordnung der fünf Drehgelenke ist es möglich, die Tankkupplung allseits im Raum derart zu schwenken, dass deren Kupplungsfläche immer parallel z.B. zu einer Flugzeugbetankungskupplung ausrichtbar ist, so dass ein Anschluss an letztere ohne Momentenübertragung möglich ist. Um die Handhabung des Kopfstückes zu erleichtern, ist das erste Rohrstück, das über das erste Drehgelenk mit dem Betankungssystem verbindbar ist und vorteilhaft mit seiner Drehachse lotrecht liegend angeordnet ist, mit dem zweiten Rohrstück über eine Balanceeinrichtung verbunden, die ein einstellbares Federpaket aufweist, das das Gewicht der an das erste Rohrstück angeschlossenen Rohrstücke sowie Drehgelenke auffängt, so dass die Tankkupplung an jeder Stelle des Raumes ohne oder ohne nennenswerte Kräfte gehalten werden kann. Hierdurch ist sichergestellt, dass auch bei grossen Nennweiten und bei unter Druck stehender Rohrleitung ein müheloses Hantieren und Anschliessen des Kopfstückes möglich ist.

Zur leichteren Handhabbarkeit sowohl des Kopfstückes wie auch des Endstückes ist zwischen dem ersten, eine lotrechte Drehbewegung gestattenden Drehgelenk und dem nachgeschalteten Rohrstück bzw. dem jeweils äusseren Rohrabschnitt eine Balanceeinheit eingeschaltet, die im einfachsten Fall aus einem Federpaket sowie einer Zugstange besteht und die das Gewicht des Endstückes wie auch des Kopfstückes aufnimmt, so dass die Hydrantenkupplung wie auch die Betankungskupplung praktisch kraftfrei manipuliert werden kann. Durch die Ausrichtbarkeit der Tankkupplung in jeder Lage im Raum ist diese momentfrei an die entsprechende Tankkupplung anschliessbar. Darüber hinaus wird durch die Balanceeinheit auch das Gewicht des Kopfstückes bzw. des Endstückes aufgenommen, so dass die Tank- bzw. die Hydrantenkupplung durch das Betankungssystem nicht belastet wird. Was die Verschleissfreiheit des Betankungssystems betrifft, so können die Rohrabschnitte und Rohrstücke aus rostfreiem Material hergestellt werden, was diese resistent gegen äussere und innere Einflüsse macht. Die Wartung kann sich auf die Kontrolle der Kupplungen beschränken.

Die Rohrabschnitte des Betankungssystems werden in etwa mit gleicher Länge ausgeführt, so dass diese mittels der Enddrehgelenke parallel zueinander verschwenkt werden können, so dass das Betankungssystem praktisch auf etwa die Länge eines Rohrstückes zusammenklappbar und abstellbar ist, d.h. bei drei Rohrstücken auf etwa ein Drittel seiner maximalen Länge. Was den Transport des Betankungssystems von einem Hydrantenanschluss zum nächsten betrifft, so ist gemäss einem weiteren Vorschlag am Betankungssystem eine Deichsel mit einer Zugkupplung angeordnet, so dass das Betankungssystem praktisch als mehrgelenkiger Anhänger von einem zum anderen Betankungssystem gezogen werden kann. Die Räder sind als Nachlaufräder ausgebildet, von denen zumindest zwei feststellbar ausgebildet sind.

In die Rohrabschnitte des Betankungssystems können die erforderlichen Armaturen wie ein hydraulisches Betankungsventil, ein Mengenzähler, ein Venturi-Rohr sowie ein Druckausgleichssystem eingeschaltet werden, wobei das Druckausgleichssystem sowohl eine Entlastung des Betankungssystems gegen Unter- wie auch Überdruck gewährleisten sollte. Ein derartiges Druckausgleichssystem ist notwendig, um das stets gefüllte Betankungssystem, das regelmässig im Freien abgestellt ist, d.h. also hoher Sonneneinstrahlung wie auch grosser Kälte ausgesetzt ist, vor Beschädigungen zu schützen.

Ein Ausführungsbeispiel der Erfindung ist im folgenden anhand der Zeichnung näher beschrieben, in dieser zeigen:

Fig. 1 eine Seitenansicht eines erfindungsgemässen Betankungssystems,

Fig. 2 eine Draufsicht auf das in Fig. 1 dargestellte Betankungssystem,

Fig. 3 das Betankungssystem nach den Fig. 1 und 2 im zusammengeklappten Zustand,

Fig. 4 das Kopfstück des Betankungssystems in Draufsicht,

Fig. 5 eine Seitenansicht des in Fig. 4 gezeigten Kopfstückes und

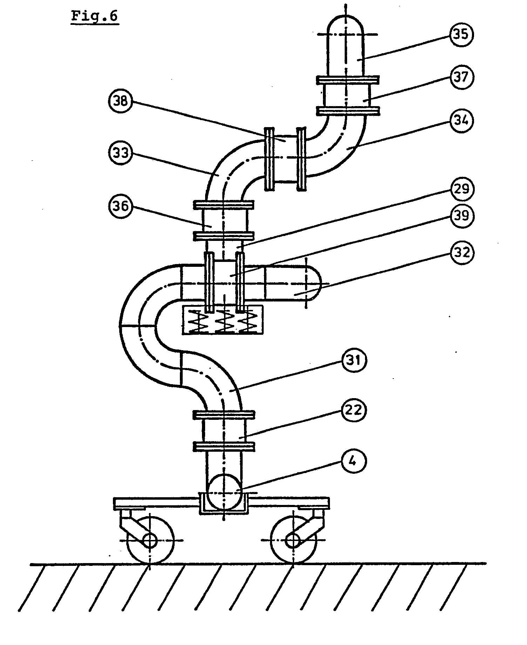

Fig. 6 eine Stirnansicht des Kopfstückes nach Fig. 4 und 5.

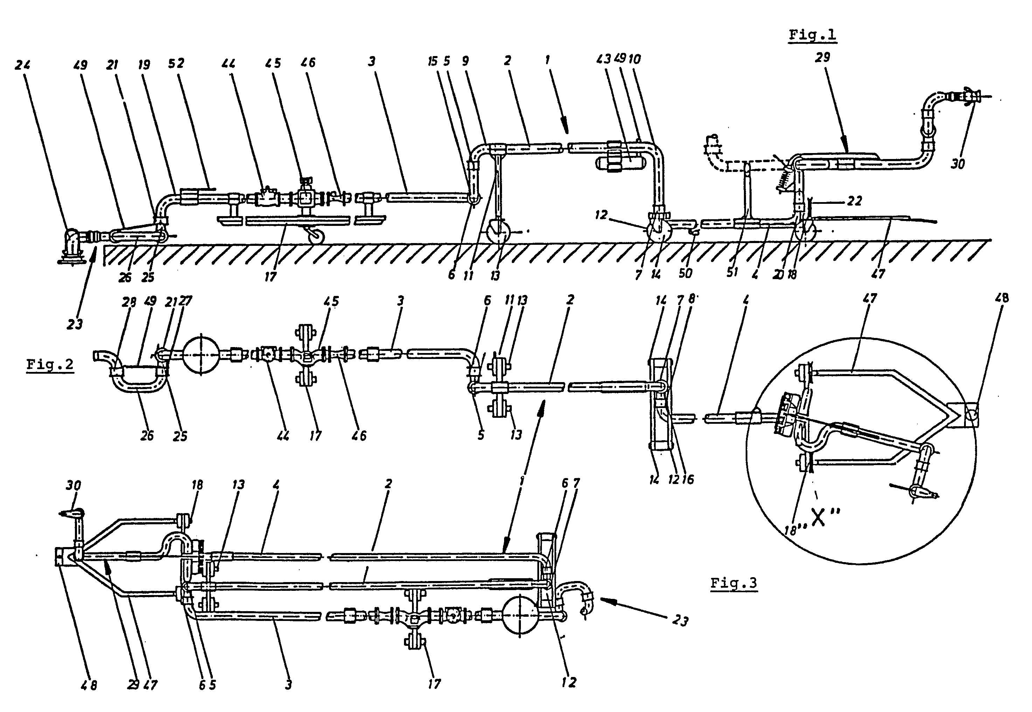

Das in den Fig. 1 bis 3 dargestellte Betankungssystem 1 weist einen zentralen Rohrabschnitt 2 sowie zwei äussere Rohrabschnitte 3, 4 auf, die mit dem zentralen Rohrabschnitt 2 über jeweils zwei Drehgelenke 5, 6 bzw. 7, 8 verbunden sind. Die Enden 9, 10 des zentralen Rohrabschnittes 2 sind nach unten gekrümmt, so dass die jeweiligen Drehgelenke 5 bzw. 7 mit lotrecht liegender Drehachse angeordnet sind. Um die Drehgelenke 5 bzw. 7 sind die äusseren Rohrabschnitte 3 bzw. 4 in horizontaler Richtung verschwenkbar. Die Drehgelenke 6 bzw. 7 gestatten eine lotrechte Verschwenkung der äusseren Rohrabschnitte 3, 4, so dass hierdurch Bodenunebenheiten ausgeglichen werden können.

An den Enden des zentralen Rohrabschnittes 2 ist je ein Wagen 11, 12 mit Rädern 13, 14 angeordnet, die den zentralen Rohrabschnitt tragen.

Die beiden Drehgelenke 5, 6 bzw. 7, 8 sind über ein winkelförmiges gebogenes Rohrstück 15 bzw. 16 miteinander verbunden. Die beiden äusseren Rohrabschnitte 3, 4 sind gegenüber dem Boden mittels eines Wagens 17, 17 abgestützt, so dass auch die an den winklig abgekröpften Enden 19, 20 der äusseren Rohrabschnitte 3, 4 angeordneten Enddrehlager 21, 22 getragen sind, wobei die Drehachse der Enddrehlager 21, 22 senkrecht zur Drehachse 6 bzw. 8 liegt, d.h. diese liegt bei waagerechtem Boden im wesentlichen lotrecht.

Am Drehgelenk 21 ist ein Endteil 23 angeschlossen, das eine Hydrantenkupplung 24 trägt. Das Endteil besteht aus zwei Rohrabschnitten 25, 26, die über ein Drehlager 27 miteinander verbunden sind, dessen Drehachse senkrecht zum Drehlager 21 angeordnet ist. Am Ende des Rohrstückes 26 ist ein weiteres Drehlager 28 angeordnet, dessen Drehachse parallel zur Drehachse des Drehlagers 27 liegt. Durch die Drehlager 27 und 28 ist die Hydrantenkupplung an Hydranten mit unterschiedlichem Niveau, bezogen auf den Erdboden, anschliessbar.

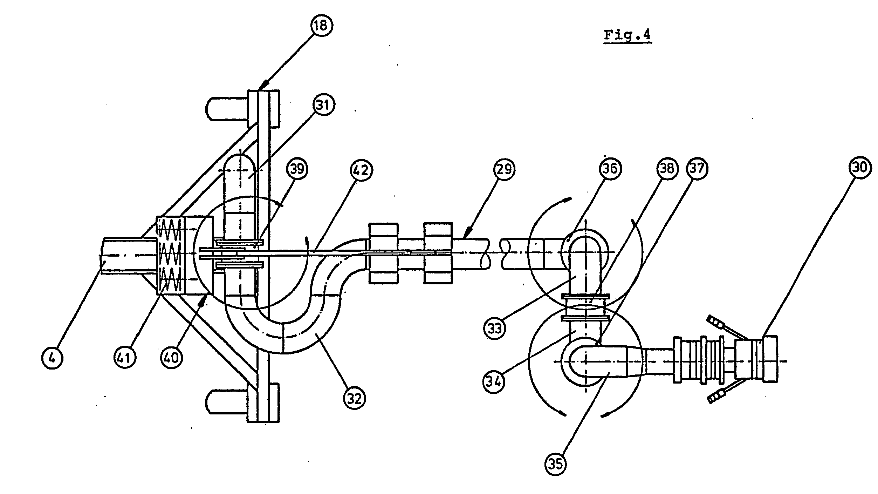

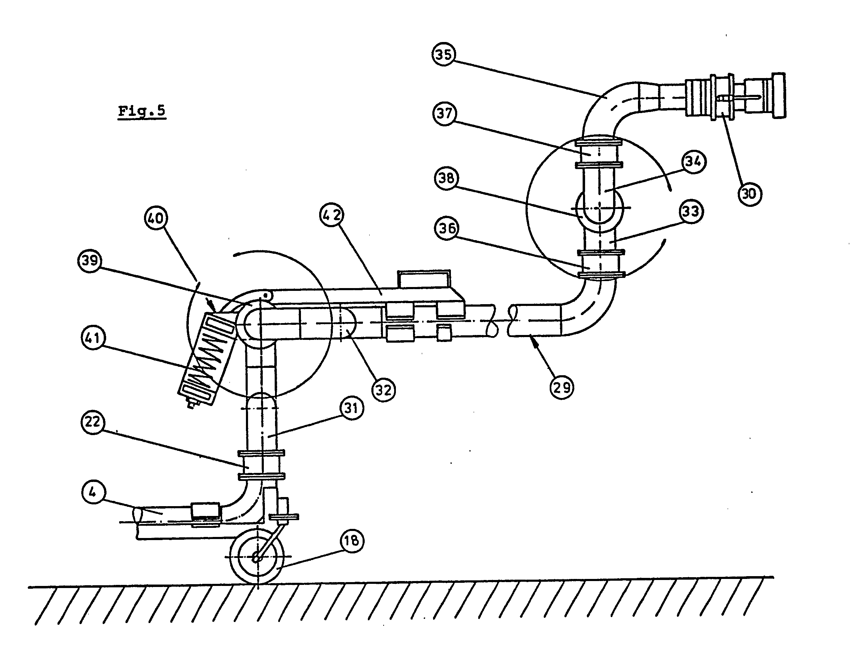

An das Drehlager 22, dessen Drehachse bei ebenem Untergrund parallel zur Drehachse des Lagers 7 liegt, ist das Kopfstück 29 angeschlossen, das eine Betankungskupplung 30 trägt. Das Kopfstück 29, das in den Fig. 4 und 5 in grösserem Massstab gezeichnet ist, besteht aus fünf Rohrstücken 31-35 wobei am Rohrstück 35 die Betankungskupplung 30 befestigt ist.

Die Drehachsen der Gelenke 36 und 37, die zwischen den Rohrstücken 34 und 35 bzw. 32 und 33 eingeschaltet sind, liegen in zueinander parallelen Ebenen. Das zwischen den Drehgelenken 36 und 37 angeordnete Drehgelenk 38 weist eine Drehachse in einer Ebene auf, die senkrecht zu den Ebenen der beiden Gelenke 36 und 37 liegt. Das das erste und das zweite Rohrstück 31 bzw. 32 verbindende erste Drehgelenk 39, an welches sich stromabwärts das zweite Drehgelenk 36 anschliesst, liegt mit seiner Drehachse senkrecht zur Drehachse des Drehgelenks 22. Durch diese spezielle Anordnung der Gelenke ist es möglich, die Betankungskupplung 30 in allen Ebenen im Raum auszurichten, ohne dass auf die Betankungskupplung 30 ein Moment ausgeübt wird.

Zwischen den beiden Rohrstücken 31 und 32, die durch das Gelenk 39 miteinander verbunden sind, ist eine Balanceeinheit 40 eingeschaltet, die aus einem Federpaket 41 sowie einer Zugstrebe 42 besteht. Das Federpaket ist in seiner Vorspannung derart einstellbar, dass die Balanceeinheit 40 das Gewicht des Kopfstückes 29 ausgleicht, so dass die Betankungskupplung 30 immer ihre Position im Raum einhält bzw. nur mit einer geringen Kraft verschiebbar und haltbar ist.

Am zentralen Rohrabschnitt 2 ist ein Druckausgleichssystem 43 angeschlossen, das bei Überschreiten eines vorgegebenen Überdrucks im Betankungssystem einen Druckabbau ermöglicht, das andererseits, falls im Betankungssystem ein Unterdruck unter einen vorgegebenen Wert eintreten sollte, gleichfalls einen Druckausgleich gewährleistet.

Des weiteren sind in dem Rohrabschnitt 3 die für das Betankungssystem erforderlichen Armaturen angeordnet wie ein hydraulisches Betankungsventil 44, ein Mengenzähler 45 sowie ein Venturi-Rohr 46.

Am Wagen 18, der mit dem vorderen Rohrabschnitt 4 verbunden ist, ist eine Deichsel 47 mit einer Zugkupplung 48 angeschlossen, die das Ankoppeln des Betankungssystems an ein Schleppfahrzeug gestattet, so dass dieses mühelos von einem zum anderen Hydranten verfahrbar ist.

In Fig. 3 ist das Betankungssystem 1 in zusammengeklapptem Zustand dargestellt. Die drei Rohrabschnitte 2, 3 und 4 liegen einander parallel, so dass das Betankungssystem in einem relativ kleinen Bereich im Verhältnis zu seiner Länge abstellbar ist. Die Rohrabschnitte 2, 3 und 4 können miteinander verriegelt werden, so dass das Betankungssystem auch in zusammengeklapptem Zustand transportierbar ist.

Im Rohrabschnitt 2 ist ein Entlüftungsventil 49 eingesetzt, das bei der Befüllung des Betankungssystems dazu dient, die in diesem vorhandene Luft entweichen zu lassen. Dieses Entlüftungsventil 49 ist vorteilhaft an der höchsten Stelle des Betankungssystems angeordnet. Des weiteren ist vorteilhaft an der tiefsten Stelle des Betankungssystems ein Entleerungsventil 50 angeordnet, über das das Betankungssystem zu entleeren ist.

Beim Transport des Betankungssystems wird das Kopfstück 29, wie dies in Fig. 1 gezeigt ist, nach hinten umgeklappt und auf einer Stütze 51 festgelegt. Des weiteren ist am Rohrstück 3 eine Befestigungseinrichtung 52 vorgesehen, die gleichfalls zur Arretierung der hochgeklappten Hydrantenkupplung 24 dient. Des weiteren sind Verriegelungen für die Rohrleitungen 2, 3 und 4 vorhanden, die diese Rohrleitungen in der in Fig. 3 gezeigten Stellung miteinander verriegeln, so dass der Transport über die Deichsel 47 in kleinstmöglicher Form des Betankungssystems 1 vorgenommen werden kann.

Von den acht Rädern des Betankungssystems sind zumindest sechs Räder als Nachlaufräder ausgebildet. Von diesen Rädern sind zumindest zwei Räder feststellbar ausgebildet, so dass ein stabiler Nachlauf des Betankungssystems beim Transport erhalten wird.

Ein Betankungssystem gemäss der Erfindung zeigt somit den Vorteil, dass dieses ohne Schlauchverbindungen auskommt und trotzdem mit seiner Betankungskupplung an jede beliebig im Raum ausgerichtete Tankkupplung anschliessbar ist, wobei auf diese Tankkupplung kein Moment ausgeübt wird, obgleich die Rohrleitungen des Betankungssystems mit Nennweiten von 4'' oder grösser ausgeführt werden können, was eine rasche Betankung ermöglicht. Darüber hinaus ist das Betankungssystem praktisch verschleissfrei und wartungsarm, wobei sich die Wartung auf die Kontrolle der Kupplungen sowie der Armaturen beschränken kann. Als Drehgelenke werden vorteilhaft ungeschmierte geflanschte Drehgelenke verwendet, die wie auch die Rohrleitung aus Edelstahl bestehen.

**Patentansprüche**

1. Betankungssystem mit einer Hydrantenkupplung für den Anschluss an Versorgungsleitungen und mit einer Betankungskupplung für den Anschluss an den zu betankenden bzw. zu entleerenden Tank, insbesondere für die Flugzeugbetankung, dadurch gekennzeichnet, dass

a) das Betankungssystem (1) mindestens zwei Rohrabschnitte (2, 3, 4) aufweist, die untereinander über jeweils zwei einander zugeordnete Drehgelenke (5, 6; 7, 8) verbunden sind, von denen der erste bzw. zentrale Rohrabschnitt (2) im Bereich seiner Enden (9, 10) von je einem Wagen (11, 12) getragen ist, dass

b) die Enden (9, 10) des ersten bzw. des zentralen Rohrabschnittes (2) abgewinkelt und mit je einem der Drehgelenke (5, 7) versehen sind, deren Drehachsen im wesentlichen lotrecht liegen, dass das jeweils zugeordnete Drehgelenk (6, 8) eine rechtwinklig hierzu liegende Drehachse aufweist, dass

c) der jeweils am ersten bzw. zentralen Rohrschnitt (2) angeschlossene Rohrabschnitt (3, 4) von einem Wagen (17, 18) oder Rad getragen ist, dass

d) an dem Aussenende jedes äusseren Rohrschnittes (3, 4) ein Enddrehgelenk (21, 22) mit im wesentlichen senkrecht zum Rohrabschnitt (3, 4) liegender Drehachse angeordnet ist, dass

e) an einem dieser Enddrehgelenke (21) unter Zwischenschaltung zweier Rohrstücke (25, 26) mittels zweier Drehgelenke mit senkrecht zum Enddrehgelenk (21) liegender Drehachse die Hydrantenkupplung (24) und dass

f) am Enddrehgelenk (22) des anderen äusseren Rohrabschnittes (4) ein Kopfstück (29) mit der Betankungskupplung (30) angeschlossen ist.

2. Betankungssystem nach Anspruch 1, dadurch gekennzeichnet, dass das Kopfstück (29) aus einer aus fünf Rohrstücken (31-35) gebildeten Rohrleitung besteht, die jeweils durch Drehgelenke (36-39) mit einem Freiheitsgrad miteinander verbunden sind, dass das der Betankungskupplung (30) gegenüberliegende Ende der Rohrleitung an das Enddrehgelenk (22) des Betankungssystems (1) angeschlossen ist, dass von diesen fünf Drehgelenken (22, 36-39) drei Drehgelenke (22, 36, 37) mit zueinander parallelen Drehachsen angeordnet sind und dass die Drehachsen der beiden anderen Gelenke (38, 39) rechtwinklig zu den Drehachsen der zueinander parallele Drehachsen aufweisenden Gelenke (22, 36, 37) liegend angeordnet sind.

3. Betankungssystem nach Anspruch 2, dadurch gekennzeichnet, dass das am Kopfstück (29) angeschlossene Enddrehgelenk (22) eine im wesentlichen lotrecht liegende Drehachse aufweist.

4. Betankungssystem nach Anspruch 2 oder 3, dadurch gekennzeichnet, dass die Drehachsen aufeinanderfolgender Drehgelenke (22, 36-39) rechtwinklig zueinander liegen.

5. Betankungssystem nach einem der Ansprüche 2 bis 4, dadurch gekennzeichnet, dass das dem kopfstückseitigen Enddrehgelenk (22) nachgeschaltete erste Rohrstück (31) mit dem diesem nachgeschalteten zweiten Rohrstück (32) über eine Balanceeinrichtung (40) verbunden ist, die einerseits ein freies Verschwenken des ersten und zweiten Rohrstückes (31, 32) gegeneinander gestattet, andererseits das Gewicht der nachgeschalteten Rohrstücke (32-35) aufnimmt.

6. Betankungssystem nach Anspruch 5, dadurch gekennzeichnet, dass die Balanceeinrichtung (40) aus einer Zugstrebe (42) und einem Federpaket (41) besteht.

7. Betankungssystem nach Anspruch 6, dadurch gekennzeichnet, dass die Vorspannung des Federpaketes (41) einstellbar ist.

8. Betankungssystem nach einem der Ansprüche 2 bis 7, dadurch gekennzeichnet, dass das kopfstückseitige Enddrehgelenk (22) und das diesem nachgeschaltete erste Drehgelenk (39) übereinanderliegend angeordnet sind.

9. Betankungssystem nach Anspruch 8, dadurch gekennzeichnet, dass die Drehachse des dem ersten Drehgelenk (39) nachgeschalteten zweiten Drehgelenks (36) in der gleichen Ebene wie die des kopfstückseitigen Enddrehgelenks (22) liegt.

10. Betankungssystem nach einem der Ansprüche 1 bis 9, dadurch gekennzeichnet, dass am Wagen (18) des äusseren Rohrabschnittes (4), an dem das Kopfstück (29) befestigt ist, eine Deichsel (47) mit einer Zugkupplung (48) angeordnet ist.

11. Betankungssystem nach einem der Ansprüche 1 bis 10, dadurch gekennzeichnet, dass die Räder (13, 14) des Wagens (11,12) als Nachlaufräder ausgebildet sind.

12. Betankungssystem nach Anspruch 11, dadurch gekennzeichnet, dass die Nachlaufräder feststellbar sind.

13. Betankungssystem nach einem der Ansprüche 1 bis 12, dadurch gekennzeichnet, dass zumindest an einem Rohrabschnitt (2) ein Druckausgleichssystem (43) angeschlossen ist.

14. Betankungssystem nach einem der Ansprüche 1 bis 13, dadurch gekennzeichnet, dass in zumindest einem der Rohrabschnitte (2, 3, 4) ein hydraulisches Betankungsventil (44), ein Mengenzähler (45) sowie ein Venturi-Rohr (46) eingeschaltet ist.

15. Betankungssystem nach einem der Ansprüche 1 bis 14, dadurch gekennzeichnet, dass zwischen der Hydrantenkupplung (24) und dem Ende des zugeordneten äusseren Rohrabschnittes (3) bzw. diesem nachgeschalteten Rohrstück (25) eine Balanceeinheit (40) eingeschaltet ist.

16. Betankungssystem nach einem der Ansprüche 1 bis 15, dadurch gekennzeichnet, dass die Länge der Rohrabschnitte (2, 3, 4) im wesentlichen gleich ist und diese so aufeinander abgestimmt sind, dass diese im zusammengeklappten Zustand in etwa parallel zueinander liegen.

17. Betankungssystem nach einem der Ansprüche 1 bis 16, dadurch gekennzeichnet, dass in einem der Rohrabschnitte (2, 3, 4) mindestens ein Entlüftungsventil (49) sowie mindestens ein Entleerungsventil (50) eingesetzt ist.

18. Betankungssystem nach einem der Ansprüche 1 bis 17, dadurch gekennzeichnet, dass an dem der Betankungskupplung (30) zugeordneten Rohrabschnitt (4) eine Stütze (51) für die Festlegung des Kopfstückes (29) angeordnet ist.

19. Betankungssystem nach einem der Ansprüche 1 bis 18, dadurch gekennzeichnet, dass an dem der Hydrantenkupplung (24) zugeordneten Rohrstück (3) eine Befestigungseinrichtug (52) für die Hydrantenkupplung (24) angeordnet ist.

**Claims**

1. Refuelling system with a hydrant coupling for connection to supply lines and with a refuelling coupling for connection to the tank to be refuelled or emptied, especially for refuelling aircraft, characterised in that

a) the refuelling system (1) has at least two pipe sections, (2, 3, 4) which are connected to each other in each case by two associated hinged joints (5, 6; 7, 8), the first or central pipe section (2) whereof is supported in the area of its ends (9, 10) by a carriage (11, 12) in each case, in that

b) the ends (9, 10) of the first or of the central pipe section (2) form an angle and are fitted with one of the hinged joints (5, 7), the axes of rotation whereof lie essentially perpendicular, in that the hinged joint (6, 8) associated in each case has an axis of rotation lying at right angles to it, in that

c) the pipe section (3, 4) connected in each case to the first or central pipe section (2) is supported by a carriage (17, 18) or wheel, in that

d) at the outer end of each outer pipe section (3, 4) an end hinged joint (21, 22) is arranged with an axis of rotation lying essentially perpendicular to the pipe section (3, 4), in that

e) to one of these end hinged joints (21) by the innterposing of two pipe pieces (25, 26) by means of two hinged joints with axis of rotation lying perpendicular to the end hinged joint (21), the hydrant coupling (24) is connected, and in that

f) to the end hinged joint (22) of the other pipe section (4) a headpiece (29) with the refuelling coupling (30) is connected.

2. Refuelling system according to Claim 1, characterised in that the headpiece (29) consists of a pipeline formed from five pipe pieces (31-35), which in each case are connected to each other by means of hinged joints (36-39) with one degree of freedom, in that the end of the pipeline opposite the refuelling coupling (30) is connected to the end hinged joint (22) of the refuelling system (1), in that of these five hinged joints (22, 36-39) three hinged joints (22, 36, 37) are arranged with axes of rotation parallel to one another, and in that the axes of rotation of the two other joints (38, 39) are arranged so as to be at right angles to the axis of rotation of the joints (22, 36, 37) displaying axes of rotation parallel to one another.

3. Refuelling system according to Claim 2, characterised in that the end hinged joint (22) connected to the headpiece (29) has an axis of rotation lying essentially perpendicular.

4. Refuelling system according to Claims 2 or 3, characterised in that the axes of rotation of succeeding hinged joints (22, 36-39) lie at right angles to one another.

5. Refuelling system according to one of Claims 2 to 4, characterised in that the first pipe piece (31) inserted after the end hinged joint (22) on the head piece side is connected to the second pipe piece (32) inserted after it by way of a balance arrangement (40), which on the one hand permits a free pivotal movement of the first and second pipe pieces (31, 32) with respect to each other, and on the other hand takes up the weight of the pipe pieces (32-35) inserted after it.

6. Refuelling system according to Claim 5, characterised in that the balance arrangement (40) consists of a diagonal tie and a spring assembly (41).

7. Refuelling system according to Claim 6, characterised in that the initial stress of the spring assembly (41) is adjustable.

8. Refuelling system according to one of Claims 2 to 7, characterised in that the end hinged joint (22) on the headpiece side and the first hinged joint (39) inserted after it are arranged so as to be superimposed on one another.

9. Refuelling system according to Claim 8, characterised in that the axis of rotation of the second hinged joint (36) inserted after the first hinged joint (39) lies on the same plane as that of the end hinged joint (22) of the headpiece side.

10. Refuelling system according to one of Claims 1 to 9, characterised in that on the carriage (18) of the outer pipe section (4) to which the headpiece (29) is attached, there is a pole (47) with a tensile coupling (48).

11. Refuelling system according to one of Claims 1 to 10, characterised in that the wheels (13, 14) of the carriage (11, 12) are developed as follower wheels.

12. Refuelling system according to Claim 11, characterised in that the follower wheels may be locked.

13. Refuelling system according to one of Claims 1 to 12, characterised in that a pressure equalising system (43) is connected at least to one pipe section (2).

14. Refuelling system according to one of Claims 1 to 13, characterised in that in at least one of the pipe sections (2, 3, 4) a hydraulic refuelling valve (44), a flowmeter (45) and a Venturi tube (46) are inserted.

15. Refuelling system according to one of Claims 1 to 14, characterised in that between the hydrant coupling (24) and the end of the associated outer pipe section (3) or the pipe section (25) inserted after it, a balance unit (40) is inserted.

16. Refuelling system according to one of Claims 1 to 15, characterised in that the length of the pipe sections (2, 3, 4) is essentially the same, and these are adjusted to one another so that they lie roughly parallel to one another in the collapsed state.

17. Refuelling system according to one of Claims 1 to 16, characterised in that in one of the pipe sections (2, 3, 4) at least one ventilating valve (49) and at least one drain valve (50) is inserted.

18. Refuelling system according to one of Claims 1 to 17, characterised in that on the pipe section (4) associated with the refuelling coupling (30) a support (51) is arranged for fixing the headpiece (29).

19. Refuelling system according to one of Claims 1 to 18, characterised in that on the pipe piece (3) associated with the hydrant coupling (24) a fixing arrangement (52) is arranged for the hydrant coupling (24).

**Revendications**

1. Système de remplissage de réservoir comportant un raccord de prise pour son raccordement à des conduites d'alimentation et un raccord de ravitaillement pour son raccordement au réservoir à remplir ou à vider, en particulier pour le ravitaillement en carburant des avions, caractérisé en ce que:

a) le système (1) comprend au moins deux tuyaux (2, 3, 4) réunis entre eux par chaque fois deux articulations tournantes associées (5, 6; 7, 8), le premier tuyau et/ou le tuyau central (2), suivant le cas, étant porté dans la zone de chacune de ses extrémités (9, 10) par un chariot (11, 12),

b) les extrémités (9, 10) du premier tuyau ou du tuyau central (2) sont à l'équerre et pourvues chacune d'une des articulations tournantes (5, 7), dont l'axe de rotation est sensiblement vertical, l'axe de rotation de l'articulation tournante associée (6, 8) étant perpendiculaire au précédent,

c) le tuyau (3, 4) raccordé au premier tuyau ou au tuyau central (2) est porté par un chariot (17, 18) ou par une roue,

d) l'extrémité extérieure de chaque tuyau extérieur (3, 4) comporte une articulation tournante d'extrémité (21, 22) dont l'axe de rotation est sensiblement perpendiculaire audit tuyau (3, 4),

e) le raccord de prise (24) est raccordé à l'une de ces articulations tournantes d'extrémité (21), au moyen de deux articulations tournantes dont l'axe de rotation est perpendiculaire à l'articulation tournante d'extrémité (21) et avec intercalation de deux bouts de tuyau (25, 26), et

f) un élément de tête (20) pourvu du raccord de ravitaillement (30) est raccordé à l'articulation tournante d'extrémité (22) de l'autre tuyau extérieur (4).

2. Système selon la revendication 1, caractérisé en ce que l'élément de tête (29) est constitué d'une conduite formée de cinq bouts de tuyau (31 à 35) réunis par des articulations tournantes (36 à 39) à un degré de liberté, en ce que l'extrémité de cette conduite opposée au raccord de ravitaillement (30) est raccordée à l'articulation tournante d'extrémité (22) correspondante, en ce que les axes de rotation de trois (22, 36, 37) des cinq articulations tournantes précitées (22, 36 à 39) sont parallèles entre eux et en ce que les axes de rotation des deux autres articulations tournantes (38, 39) sont perpendiculaires aux axes de rotation de ces articulations (22, 36, 37) qui ont des axes parallèles.

3. Système selon la revendication 2, caractérisé en ce que l'axe de rotation de l'articulation tournante d'extrémité (22) raccordée à l'élément de tête (29) est sensiblement vertical.

4. Système selon l'une des revendications 2 et 3, caractérisé en ce que les axes de rotation d'articulations tournantes consécutives (22, 36 à 39) sont perpendiculaires l'un à l'autre.

5. Système selon l'une des revendications 2 à 4, caractérisé en ce que le premier bout de tuyau (31) qui suit l'articulation tournante d'extrémité côté élément (22) est relié au deuxième bout de tuyau (32) qui le suit par un dispositif de compensation (40) qui permet une libre rotation des premier et deuxième bouts de tuyau (31, 32) l'un par rapport à l'autre et absorbe le poids des bouts de tuyau (32 à 35) qui le suivent.

6. Système selon la revendication 5, caractérisé en ce que le dispositif de compensation (40) est constitué d'un tirant (42) et d'un paquet de ressorts (41).

7. Système selon la revendication 6, caractérisé en ce que la contrainte initiale du paquet de ressorts (41) est réglable.

8. Système selon l'une des revendications 2 à 7, caractérisé en ce que l'articulation tournante d'extrémité côté élément de tête (22) et la première articulation tournante (30) qui la suit sont placées l'un au-dessus de l'autre.

9. Système selon la revendication 8, caractérisé en ce que l'axe de rotation de la deuxième articulation tournante (36) qui suit la première (39) est dans le même plan que celui de l'articulation tournante d'extrémité côté élément de tête (22).

10. Système selon l'une des revendications 1 à 9, caractérisé en ce que le chariot (18) du tuyau extérieur (4) auquel est fixé l'élément de tête (29) comporte un timon (47) pourvu d'un raccord d'attelage (48).

11. Système selon l'une des revendications 1 à 10, caractérisé en ce que les roues (13, 14) du chariot (11, 12) sont des roues chassantes.

13. Système selon la revendication 11, caractérisé en ce que les roues chassantes peuvent être immobilisées.

13. Système selon l'une des revendications 1 à 12, caractérisé en ce qu'un système d'égalisation de pression (43) est raccordé à au moins un tuyau (2).

14. Système selon l'une des revendications 1 à 13, caractérisé en ce que, sur au moins un des tuyaux (2, 3, 4), sont montés un robinet hydraulique de ravitaillement (44), un compteur de quantité débitée (45) et un tube de Venturi (46).

15. Système selon l'une des revendications 1 à 14, caractérisé en ce qu'un dispositif de compensation (40) est monté entre le raccord de bouche (24) et l'extrémité du tuyau extérieur associé (3) ou le bout du tuyau (25) qui suit celui-ci.

16. Système selon l'une des revendications 1 à 15, caractérisé en ce que les tuyaux (2, 3, 4) ont à peu près la même longueur et sont accordés entre eux de façon à être à peu près parallèles à l'état replié.

17. Système selon l'une des revendications 1 à 16, caractérisé en ce qu'un des tuyaux (2, 3, 4) est pourvu d'au moins un purgeur d'air (49) et au moins un robinet de vidange (50).

18. Système selon l'une des revendications 1 à 17, caractérisé en ce que le tuyau (4) associé au raccord de ravitaillement (30) est pourvu d'un support (51) pour la fixation de l'élément de tête (29).

19. Système selon l'une des revendications 1 à 18, caractérisé en ce que le tuyau (3) associé au raccord de prise (24) est pourvu d'un dispositif de fixation de ce dernier (52).

Fig.1

Fig.2

Fig.3

Fig.4

Fig.5

0 166 799

**Fig.6**

15